# EUROPEAN PATENT APPLICATION

(11) **EP 4 790 803 A1**
(43) Date of publication of application: **12.08.2026**
(21) Application number: 25864510.0
(22) Date of filing: 11.07.2025
(51) Int. Cl.: H01M 50/105, B29C 59/00, B29D 99/00

(54) **POUCH FOR SECONDARY BATTERY AND MANUFACTURING METHOD THEREOF**

(30) Priority: 22.11.2024 KR 20240168169
(71) Applicant: LG ENERGY SOLUTION, LTD., Seoul 07335 (KR)
(72) Inventor: WON, Kwang Ho, Daejeon 34122 (KR); LEE, Jin Wuk, Daejeon 34122 (KR)
(74) Representative: Goddar, Heinz J.
(86) International application number: PCT/KR2025/010148
(87) International publication number: WO 2026/111085

(57) **Abstract**

The present disclosure relates to a manufacturing method of a pouch for a secondary battery, which includes a step of preparing a pouch fabric in which a first pocket area, a second pocket area disposed to be spaced apart from the first pocket area, and a gas pocket area disposed between the first pocket area and the second pocket area are defined; and a step of cutting the pouch fabric along a cutting line passing through the gas pocket area, wherein when the pouch fabric is cut along the cutting line, the gas pocket area is divided into a first divided gas pocket area connected to the first pocket area and a second divided gas pocket area connected to the second pocket area, and wherein the cutting line is defined in a left-right asymmetrical manner based on a center line passing through the center of the gas pocket area, thereby obtaining the advantageous effect of reducing the amount of pouch fabric used and lowering costs.

## Description

### TECHNICAL FIELD

### CROSS-REFERENCE TO RELATED APPLICATIONS

The present application is based on and claims priority from Korean Patent Application No. 10-2024-0168169, filed on November 22, 2024, with the Korean Intellectual Property Office, the disclosure of which is incorporated herein in its entirety by reference.

### TECHNICAL FIELD

The present disclosure relates to a pouch for a secondary battery and a manufacturing method thereof, and more specifically, to a pouch for a secondary battery and a manufacturing method thereof that may reduce the amount of pouch fabric used and lower costs.

### BACKGROUND ART

With the development of technology in electric vehicles, energy storage systems (ESSs), and portable electronic devices, the demand for a lithium secondary battery as an energy source is rapidly increasing.

A lithium secondary battery may be classified into a pouch type and a can type depending on the material of a case (exterior material) that accommodates an electrode assembly, and the electrode assembly may be classified into a wound type (jelly roll type), a stacked type, a stack and lamination type, or a stack and folding type, depending on the manufacturing method and shape.

Among these, since a pouch-type secondary battery uses a pouch made of a flexible polymer material to form its exterior, it may significantly reduce the weight of the battery compared to a cylindrical or prismatic battery using a metal can, thereby enabling lightweight batteries and having the advantage of being able to be made into various shapes, which attracts a lot of attention.

In the pouch-type secondary battery, electrode assemblies are accommodated in a stacked manner, wherein an electrode tab and an electrode lead are connected to the electrode assembly, and the electrode lead protrudes from the pouch. The electrode lead is electrically connected to an external device through contact to receive power from the external device.

The pouch-type secondary battery (hereinafter, battery cell) may be manufactured through the processes of assembling cells and activating batteries, and in the battery activation step, the battery cell is mounted on a charging and discharging device and charged and discharged under the conditions necessary for activation. In this way, the process of performing a predetermined charging and discharging using a charging and discharging device to activate the battery cell is called a formation process.

In the battery activation step, gas generated from the electrode assembly may be captured in a gas pocket portion provided in the pouch and removed after the activation process. That is, the gas pocket portion is a part of the pouch and may be cut from the pouch after the gas is captured.

Meanwhile, the gas pocket portion of the pouch is a dead volume that is discarded after capturing gas, and thus, as the size of the gas pocket portion increases, the amount of pouch fabric used and costs increase, so that the size of the gas pocket portion should be minimized.

Thus, recently, a method of reducing the size of the gas pocket portion has been considered by preemptively removing some of the gas generated inside the pouch during the formation process of the secondary battery to reduce the amount of gas captured in the gas pocket portion.

However, according to the existing manufacturing method, as the cut part of the pouch fabric corresponding to the surrounding area of the gas pocket portion cannot be utilized and should be discarded during the cutting process of the pouch fabric, there is a problem of increasing the amount of pouch fabric used and costs.

Accordingly, various studies have been conducted recently to miniaturize the size of the gas pocket portion, minimize the amount of pouch fabric used, and lower costs, but these are still insufficient, and further development thereof is required.

### DISCLOSURE

### TECHNICAL PROBLEM

The embodiment of the present disclosure is directed to providing a pouch for a secondary battery and a manufacturing method thereof that may reduce the amount of pouch fabric used and lower costs.

In particular, the embodiment of the present disclosure is directed to minimizing the amount of pouch fabric used while miniaturizing the size of the gas pocket portion of the pouch.

Above all, the embodiment of the present disclosure is directed to efficiently using the pouch fabric corresponding to the gas pocket area disposed between the first pocket area and the second pocket area adjacent to each other without discarding any part.

Additionally, the embodiment of the present disclosure is directed to forming gas pocket areas of different pouches simultaneously through a single cutting process.

Additionally, the embodiment of the present disclosure may obtain the advantageous effect of simplifying the structure and manufacturing process and enhancing productivity.

The problem to be solved in the embodiment is not limited thereto, and it can be said that the purpose or effect that may be identified from the method of solution or embodiment of the problem described below is also included.

### TECHNICAL SOLUTION

According to a preferred embodiment of the present disclosure for achieving the objects of the present disclosure described above, a manufacturing method of a pouch for a secondary battery includes a step of preparing a pouch fabric in which a first pocket area, a second pocket area disposed to be spaced apart from the first pocket area, and a gas pocket area disposed between the first pocket area and the second pocket area are defined; and a step of cutting the pouch fabric along a cutting line passing through the gas pocket area, wherein when the pouch fabric is cut along the cutting line, the gas pocket area is divided into a first divided gas pocket area connected to the first pocket area and a second divided gas pocket area connected to the second pocket area, and wherein the cutting line is defined in a left-right asymmetrical manner based on a center line passing through the center of the gas pocket area.

This is to reduce the amount of pouch fabric used and lower costs.

That is, recently, a method of reducing the size of the gas pocket portion has been considered by preemptively removing some of the gas generated inside the pouch during the formation process of the secondary battery to reduce the amount of gas captured in the gas pocket portion. However, according to the existing manufacturing method, as the cut part of the pouch fabric corresponding to the surrounding area of the gas pocket portion cannot be utilized and should be discarded during the cutting process of the pouch fabric, there is a problem of increasing the amount of pouch fabric used and raising costs.

However, by cutting the pouch fabric along a cutting line defined in a left-right asymmetrical manner based on a center line passing through the center of the gas pocket area, the embodiment of the present disclosure may obtain the advantageous effect of reducing the amount of pouch fabric used and lowering costs.

In particular, by cutting the pouch fabric along a cutting line defined in a left-right asymmetrical manner based on a center line passing through the center of the gas pocket area, it is possible to efficiently use the pouch fabric corresponding to the gas pocket area without discarding any part, and thus the embodiment of the present disclosure may obtain the advantageous effect of minimizing the amount of pouch fabric used while miniaturizing the size of the gas pocket portion of the pouch.

The cutting line may be defined in various structures with left-right asymmetrical characteristics based on a center line passing through the center of the gas pocket area.

According to a preferred embodiment of the present disclosure, the cutting line may include a first vertical cutting line defined in the gas pocket area adjacent to the first pocket area; a cross-cutting line connected to an end of the first vertical cutting line along a direction intersecting the first vertical cutting line; and a second vertical cutting line connected to an end of the cross-cutting line and defined in the gas pocket area adjacent to the second pocket area.

The cross-cutting line may be defined along various directions intersecting the first vertical cutting line, and the present disclosure is not limited or restricted by the direction in which the cross-cutting line is formed.

According to a preferred embodiment of the present disclosure, the cross-cutting line may be defined to be orthogonal to the first vertical cutting line and the second vertical cutting line.

Preferably, the first divided gas pocket area and the second divided gas pocket area may be defined to be symmetrical based on the cross-cutting line.

Here, when the first divided gas pocket area and the second divided gas pocket area are symmetrical based on the cross-cutting line, it may be defined that the cross-cutting line passes through the center of the gas pocket area, and it may be understood that the gas pocket area is bisected by the cross-cutting line.

According to a preferred embodiment of the present disclosure, the first divided gas pocket area and the second divided gas pocket area may be defined to have a rectangular shape.

According to a preferred embodiment of the present disclosure, the cutting line may be defined in a straight line inclined with respect to the center line.

According to a preferred embodiment of the present disclosure, the first divided gas pocket area and the second divided gas pocket area may be defined to be rotationally symmetrical based on the cutting line.

According to a preferred embodiment of the present disclosure, the first divided gas pocket area and the second divided gas pocket area may be defined to have a triangular shape.

According to a preferred embodiment of the present disclosure, the first pocket area may include a 1-1 pocket; and a 1-2 pocket provided to be spaced apart from the 1-1 pocket, wherein the first divided gas pocket area may be provided symmetrically at both ends of the first pocket area based on a first fold line defined to pass through the centers of the 1-1 pocket and the 1-2 pocket.

According to a preferred embodiment of the present disclosure, the second pocket area may include a 2-1 pocket; and a 2-2 pocket provided to be spaced apart from the 2-1 pocket, wherein the second divided gas pocket area may be provided symmetrically at both ends of the second pocket area based on a second fold line defined to pass through the centers of the 2-1 pocket and the 2-2 pocket.

According to another preferred aspect of the present disclosure, a pouch for a secondary battery includes a pouch body; a pocket portion provided in the pouch body and accommodating an electrode assembly; and a gas pocket portion provided in the pouch body to be spaced apart from the pocket portion and accommodating gas generated from the electrode assembly, wherein the gas pocket portion is provided to have a left-right asymmetrical shape based on a reference line passing through the center of the pocket portion.

According to another preferred aspect of the present disclosure, the gas pocket portion may have a relatively smaller rectangular shape than the pocket portion and may be provided adjacent to one end of the pocket portion.

According to another preferred aspect of the present disclosure, the gas pocket portion may be provided to have a cross-sectional area that gradually decreases from one end toward the other end.

According to another preferred aspect of the present disclosure, the gas pocket portion may be provided to have a triangular shape.

### ADVANTAGEOUS EFFECTS

As described above, according to the embodiment of the present disclosure, it is possible to obtain the advantageous effect of reducing the amount of pouch fabric used and lowering costs.

In particular, according to the embodiment of the present disclosure, it is possible to obtain the advantageous effect of minimizing the amount of pouch fabric used while miniaturizing the size of the gas pocket portion of the pouch.

Above all, according to the embodiment of the present disclosure, it is possible to efficiently use the pouch fabric corresponding to the gas pocket area disposed between the first pocket area and the second pocket area adjacent to each other without discarding any part.

Additionally, according to the embodiment of the present disclosure, it is possible to form gas pocket areas of different pouches simultaneously through a single cutting process.

Additionally, according to the embodiment of the present disclosure, it is possible to obtain the advantageous effect of simplifying the structure and manufacturing process and enhancing productivity.

### DESCRIPTION OF DRAWINGS

FIG. 1 is a view for describing a manufacturing method of a pouch for a secondary battery according to an embodiment of the present disclosure.
FIG. 2 is a view for describing a pouch fabric cut along a cutting line in a manufacturing method of a pouch for a secondary battery according to an embodiment of the present disclosure.
FIG. 3 is a view for describing a folding process of a pouch fabric in a manufacturing method of a pouch for a secondary battery according to an embodiment of the present disclosure.
FIG. 4 is a view for describing a pouch for a secondary battery manufactured by a manufacturing method of a pouch for a secondary battery according to an embodiment of the present disclosure.
FIG. 5 is a view for describing a manufacturing method of a pouch for a secondary battery according to another embodiment of the present disclosure.
FIG. 6 is a view for describing a pouch fabric cut along a cutting line in a manufacturing method of a pouch for a secondary battery according to another embodiment of the present disclosure.
FIG. 7 is a view for describing a folding process of a pouch fabric in a manufacturing method of a pouch for a secondary battery according to another embodiment of the present disclosure.
FIG. 8 is a view for describing a pouch for a secondary battery manufactured by a manufacturing method of a pouch for a secondary battery according to another embodiment of the present disclosure.

### BEST MODE

Hereinafter, preferred embodiments of the present disclosure will be described in detail with reference to the accompanying drawings.

However, the technical idea of the present disclosure is not limited to some of the embodiments described, but may be implemented in various different forms, and within the scope of the technical idea of the present disclosure, one or more of the components may be selectively combined or substituted between the embodiments.

Additionally, the terms (including technical and scientific terms) used in the embodiments of the present disclosure may be construed as meanings generally understood by those having ordinary skill in the art to which the present disclosure pertains, unless explicitly specifically defined and described, and terms that are commonly used, such as terms defined in dictionaries, may be construed in consideration of the contextual meaning of the related technology.

Additionally, the terms used in the embodiments of the present disclosure are for the purpose of describing the embodiments and are not intended to limit the present disclosure.

In this specification, the singular form may include the plural form unless specifically stated in the phrase, and when described as "at least one (or more than one) of A, B, and C", it may include one or more of all combinations that can be combined with A, B, and C.

Additionally, in describing the components of the embodiments of the present disclosure, terms such as first, second, A, B, (a), (b), and the like may be used.

These terms are only intended to distinguish the components from other components, and do not limit the nature, order, or sequence of the corresponding components.

And, when a component is described as being 'connected', 'coupled', or 'contacted' to another component, this may include not only cases where the component is directly connected, coupled, or contacted to another component, but also cases where the component is 'connected', 'coupled', or 'contacted' to another component through a third component.

Additionally, when it is described as being formed or disposed "on top of (above) or on bottom of (below)" each component, the top (above) or bottom (below) may include not only cases where two components are in direct contact with each other, but also cases where one or more other components are formed or disposed between the two components. Additionally, when expressed as "on top of (above) or on bottom of (below)", this may include the meaning of not only the upward direction but also the downward direction based on one component.

### Embodiment 1

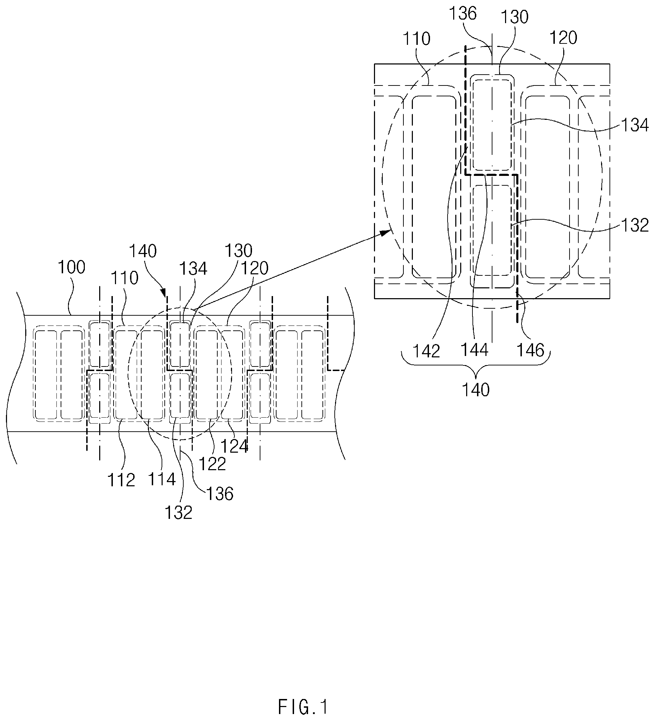

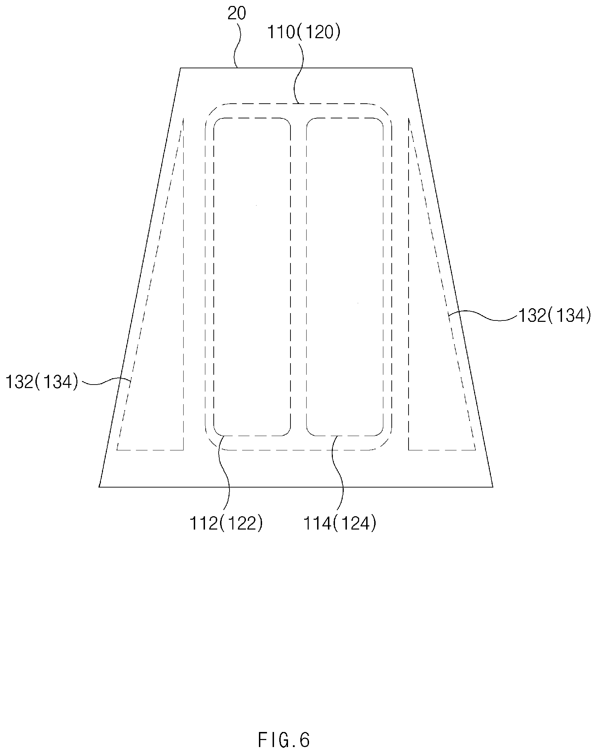

Referring to FIGS. 1 to 8, a manufacturing method of a pouch for a secondary battery according to the embodiment of the present disclosure includes a step of preparing a pouch fabric 100 in which a first pocket area 110, a second pocket area 120 disposed to be spaced apart from the first pocket area 110, and a gas pocket area 130 disposed between the first pocket area 110 and the second pocket area 120 are defined; and a step of cutting the pouch fabric 100 along a cutting line 140 passing through the gas pocket area 130, wherein when the pouch fabric 100 is cut along the cutting line 140, the gas pocket area 130 is divided into a first divided gas pocket area 132 connected to the first pocket area 110 and a second divided gas pocket area 134 connected to the second pocket area 120, and wherein the cutting line is defined in a left-right asymmetrical manner based on a center line 136 passing through the center of the gas pocket area 130.

For reference, the manufacturing method of a pouch for a secondary battery according to the embodiment of the present disclosure may be used to cut the pouch fabric 100 into a pouch having a gas pocket portion 40, and the present disclosure is not limited or restricted by the type and structure of the pouch used in the manufacturing method of a pouch for a secondary battery.

First, referring to FIG. 1, a pouch fabric 100 in which a first pocket area 110, a second pocket area 120 disposed to be spaced apart from the first pocket area 110, and a gas pocket area 130 disposed between the first pocket area 110 and the second pocket area 120 are defined is prepared.

The pouch fabric 100 may be formed of various materials capable of protecting components such as an electrode assembly 50 and an electrolyte constituting the battery cell, while supplementing electrochemical properties by the electrode assembly 50 and the electrolyte and ensuring heat dissipation. The present disclosure is not limited or restricted by the material and characteristics of the pouch fabric 100.

For example, the pouch fabric 100 may be configured to have a multilayer film structure in which a polyolefin resin layer that is a thermal bonding layer having heat sealability and serving as a sealing material is laminated as an inner layer, an aluminum layer that is a metal layer serving as both a substrate to maintain mechanical strength and a barrier layer against moisture and oxygen is laminated as a middle layer, and a nylon layer that serves as both a substrate and a protective layer is laminated as an outer layer.

The pouch fabric 100 may be supplied in various ways depending on required conditions and design specifications.

For example, the pouch fabric 100 may be provided by being wound in a roll form on a supply roll (not shown). According to another embodiment of the present disclosure, it is also possible to provide the pouch fabric by cutting it in advance to a preset standard.

The first pocket area 110 is provided to define a pocket portion 30 (receiving space) in which the electrode assembly 50 constituting a unit cell (e.g., a first unit cell) is accommodated.

The first pocket area 110 may be defined in various structures capable of defining the pocket portion 30 in which the electrode assembly 50 is accommodated, and the present disclosure is not limited or restricted by the structure and shape of the first pocket area 110.

According to a preferred embodiment of the present disclosure, the first pocket area 110 may include a 1-1 pocket 112 and a 1-2 pocket 114 provided to be spaced apart from the 1-1 pocket 112, and the 1-1 pocket 112 and the 1-2 pocket 114 may overlap each other and cooperatively define the pocket portion 30 in which the electrode assembly 50 is accommodated.

For example, the first pocket area 110 may be defined in a roughly rectangular shape, and the 1-1 pocket 112 and the 1-2 pocket 114 may be defined in a roughly rectangular shape. According to another embodiment of the present disclosure, the first pocket area may be formed in a circular shape or other shapes.

The second pocket area 120 is provided to define a pocket portion 30 (receiving space) in which the electrode assembly 50 constituting another unit cell (e.g., a second unit cell) is accommodated.

The second pocket area 120 may be defined in various structures capable of defining the pocket portion 30 in which the electrode assembly 50 is accommodated, and the present disclosure is not limited or restricted by the structure and shape of the second pocket area 120.

According to a preferred embodiment of the present disclosure, the first pocket area 110 may include a 2-1 pocket 122 and a 2-2 pocket 124 provided to be spaced apart from the 2-1 pocket 122, and the 2-1 pocket 122 and the 2-2 pocket 124 may overlap each other and cooperatively define the pocket portion 30 in which the electrode assembly 50 is accommodated.

For example, the second pocket area 120 may be defined in a roughly rectangular shape, and the 2-1 pocket 122 and the 2-2 pocket 124 may be defined in a roughly rectangular shape. According to another embodiment of the present disclosure, the second pocket area may be formed in a circular shape or other shapes.

The gas pocket area 130 is an area for forming the gas pocket portion 40 of the pouch corresponding to each unit cell and is defined between the first pocket area 110 and the second pocket area 120.

The gas pocket area 130 may be defined in various structures depending on required conditions and design specifications, and the present disclosure is not limited or restricted by the structure and shape of the gas pocket area 130.

For example, the gas pocket area 130 may be defined in a roughly rectangular shape. Alternatively, the gas pocket area 130 may be defined in a trapezoidal or other geometric shapes.

Next, the pouch fabric 100 is cut along a cutting line 140 passing through the gas pocket area 130.

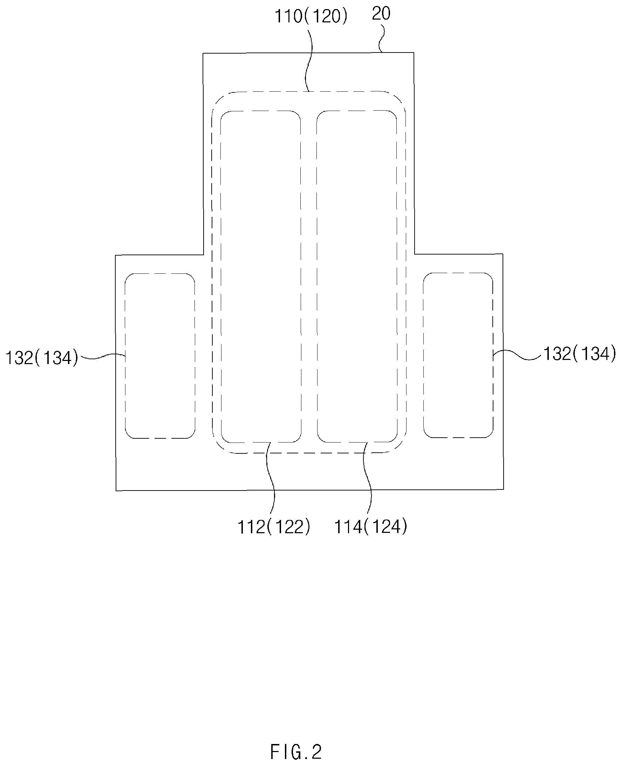

Referring to FIGS. 1 and 2, in the step of cutting the pouch fabric 100, the pouch fabric 100 may be cut along the cutting line 140 defined in a left-right asymmetrical manner based on the center line 136 passing through the center of the gas pocket area 130.

Here, when the cutting line 140 is defined in a left-right asymmetrical manner based on the center line 136, it may be understood that the left and right sides of the cutting line 140 based on the center line 136 have different shapes.

The cutting line 140 may be defined in various structures with left-right asymmetrical characteristics based on the center line 136 passing through the center of the gas pocket area 130, and the present disclosure is not limited or restricted by the structure and shape of the cutting line 140.

According to a preferred embodiment of the present disclosure, the cutting line 140 may include a first vertical cutting line 142 defined in the gas pocket area 130 adjacent to the first pocket area 110; a cross-cutting line 144 connected to an end of the first vertical cutting line 142 along a direction intersecting the first vertical cutting line 142; and a second vertical cutting line 146 connected to an end of the cross-cutting line 144 and defined in the gas pocket area 130 adjacent to the second pocket area 120.

For example, the first vertical cutting line 142 may be defined in the upper left area (based on FIG. 1) of the gas pocket area 130 adjacent to the first pocket area 110 to have a straight line shape along the length direction (upper-lower direction based on FIG. 1) of the center line 136, and the second vertical cutting line 146 may be defined in the lower right area (based on FIG. 1) of the gas pocket region 130 adjacent to the second pocket area 120 to have a straight line shape along the length direction (upper-lower direction based on FIG. 1) of the center line 136, and the cross-cutting line 144 is defined to continuously connect one end of the first vertical cutting line 142 and one end of the second vertical cutting line 146 along the direction intersecting the first vertical cutting line 142.

The cross-cutting line 144 may be defined along various directions intersecting the first vertical cutting line 142, and the present disclosure is not limited or restricted by the direction in which the cross-cutting line 144 is formed.

According to a preferred embodiment of the present disclosure, the cross-cutting line 144 may be defined in a straight line along a horizontal direction (left-right direction based on FIG. 1) orthogonal (90 degrees) to the first vertical cutting line 142 and the second vertical cutting line 146.

Preferably, the first divided gas pocket area 132 and the second divided gas pocket area 134 may be defined to be symmetrical based on the cross-cutting line 144.

Here, when the first divided gas pocket area 132 and the second divided gas pocket area 134 are symmetrical based on the cross-cutting line 134, it may be defined that the cross-cutting line 144 passes through the center of the gas pocket area 130, and it may be understood that the gas pocket area 130 is bisected by the cross-cutting line 144.

According to a preferred embodiment of the present disclosure, the first divided gas pocket area 132 and the second divided gas pocket area 134 may be defined to have a rectangular shape.

In the above-described and illustrated embodiment of the present disclosure, an example in which the cross-cutting line 144 is orthogonal to the first vertical cutting line 142 and the second vertical cutting line 146 is described, but it is also possible to configure the cross-cutting line 144 to be inclined at an angle greater than or less than 90 degrees with respect to the first vertical cutting line 142 (or the second vertical cutting line).

Additionally, in the above-described and illustrated embodiment of the present disclosure, an example in which the first vertical cutting line 142, the cross-cutting line 144, and the second vertical cutting line 146 are all defined in a straight line is described, but according to another embodiment of the present disclosure, it is also possible to define at least one of the first vertical cutting line, the cross-cutting line, and the second vertical cutting line in a curved line or other shapes.

According to a preferred embodiment of the present disclosure, the cutting line 140 may be formed at each of the left and right ends of the first pocket area 110 (or the second pocket area) based on the first pocket area 110 (or the second pocket area).

According to a preferred embodiment of the present disclosure, the first divided gas pocket area 132 may be provided symmetrically at both ends of the first pocket area 110 based on a first fold line 116 defined to pass through the centers of the 1-1 pocket 112 and the 1-2 pocket 114.

Similarly, the second divided gas pocket area 134 may be provided symmetrically at both ends of the second pocket area 120 based on a second fold line 126 defined to pass through the centers of the 2-1 pocket 122 and the 2-2 pocket 124.

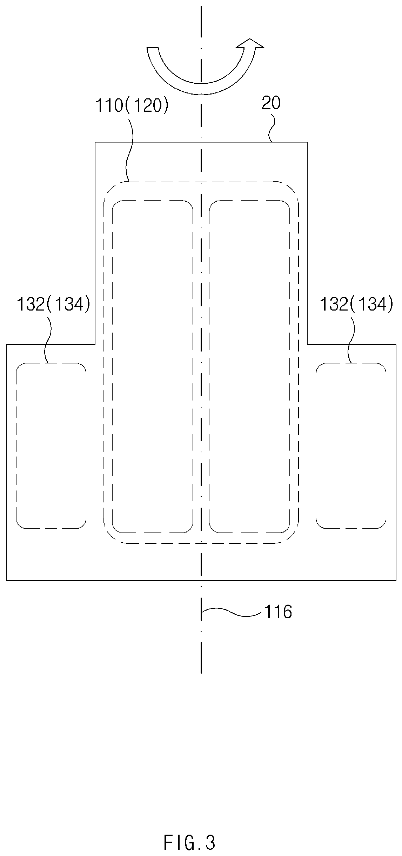

Meanwhile, referring to FIG. 3, the pouch body 20 cut from the pouch fabric 100 may be folded around the first fold line 116 (or the second fold line).

As the pouch body 20 is folded around the first fold line 116 (or the second fold line), the 1-1 pocket 112 (or the 2-1 pocket) and the 1-2 pocket 114 (or the 2-2 pocket) may overlap each other and cooperatively define the pocket portion 30 in which the electrode assembly 50 is accommodated, and the first pocket area 110 (or the second pocket area) may define the gas pocket portion 40.

### Embodiment 2

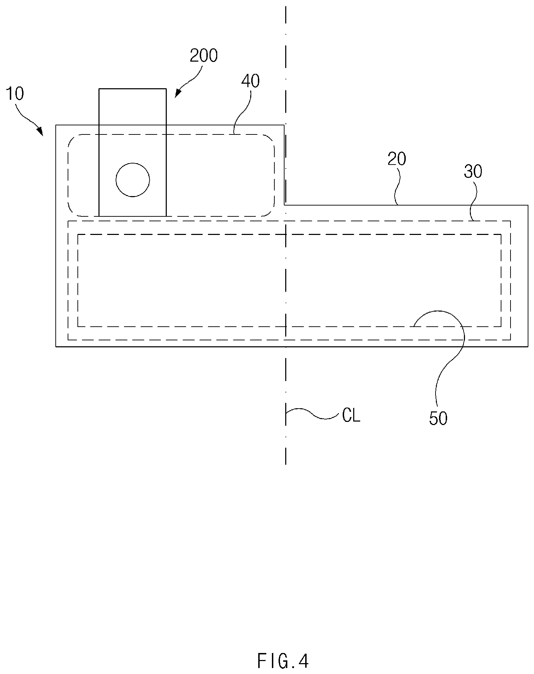

Meanwhile, the pouch for a secondary battery 10 manufactured by the manufacturing method of a pouch for a secondary battery according to the embodiment of the present disclosure may be confirmed in FIG. 4.

Referring to FIG. 4, the pouch for a secondary battery 10 according to the embodiment of the present disclosure includes a pouch body 20; a pocket portion 30 provided in the pouch body 20 and accommodating an electrode assembly 50; and a gas pocket portion 40 provided in the pouch body 20 to be spaced apart from the pocket portion 30 and accommodating gas generated from the electrode assembly 50, wherein the gas pocket portion 40 may be provided to have a left-right asymmetrical shape based on a reference line CL passing through the center of the pocket portion 30.

According to a preferred embodiment of the present disclosure, the gas pocket portion 40 may have a relatively smaller rectangular shape than the pocket portion 30 and may be provided adjacent to one end of the pocket portion 30.

Preferably, the length of the gas pocket portion 40 (the length along the left-right direction based on FIG. 4) may be defined as 1/2 of the length of the pocket portion 30.

For reference, the electrode assembly 50 may include an electrode (not shown) and a separator (not shown) laminated on the electrode.

For example, the electrode may include a first electrode (e.g., positive electrode) laminated on one surface (e.g., top surface) of the separator, and a second electrode (e.g., negative electrode) laminated on the other surface (e.g., bottom surface) of the separator.

The first electrode (positive electrode) and the second electrode (negative electrode) may be formed by applying a slurry obtained by mixing an electrode active material, a binder, and a plasticizer to a positive electrode current collector and a negative electrode current collector.

The positive electrode current collector is not particularly limited as long as it has conductivity without causing a chemical change in the battery. For example, stainless steel, aluminum, nickel, titanium, calcined carbon, or aluminum or stainless steel surface-treated with carbon, nickel, titanium, silver, or the like may be used as the positive electrode current collector.

The negative electrode current collector is not particularly limited as long as it has conductivity without causing a chemical change in the battery. For example, copper, stainless steel, aluminum, nickel, titanium, calcined carbon, or aluminum or stainless steel surface-treated with carbon, nickel, titanium, silver, or the like may be used as the negative electrode current collector. For example, a thin copper film (e.g., electrolytic copper foil or pressure copper foil) may be used as the negative electrode current collector.

The separator is designed to separate the negative electrode and the positive electrode and provide a passage for lithium ions to move, and may be used without any particular limitation as long as it is generally used as a separator in a lithium secondary battery.

For example, as a separator, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used.

Alternatively, a conventional porous nonwoven fabric, for example, a nonwoven fabric made of high-melting-point glass fibers, polyethylene terephthalate fibers, or the like may be used as a separator, or a coated separator including a ceramic component or a polymer material may be used to ensure heat resistance or mechanical strength.

According to a preferred embodiment of the present disclosure, a venting unit 200 may be connected to the gas pocket portion 40, and some of the gas generated from the electrode assembly 50 during the formation process of the secondary battery may be pre-sucked through the venting unit 200 and discharged to the outside, and after the activation process is completed, the gas pocket portion 40 which capture the remaining gas may be cut from the pouch body 20.

The venting unit 200 may be provided in various structures capable of sucking in gas generated inside the pouch body 20 and discharging it to the outside, and the present disclosure is not limited or restricted by the type and structure of the venting unit 200.

Meanwhile, in the above-described and illustrated embodiment of the present disclosure, an example in which the cutting line 140 is configured in a folded structure including a first vertical cutting line 142, a cross-cutting line 144, and a second vertical cutting line 146 is described, but according to another embodiment of the present disclosure, it is also possible to configure the cutting line in a straight line.

In addition, identical or equivalent reference numerals are assigned to identical or equivalent parts of the above-described configuration, and a detailed description thereof will be omitted.

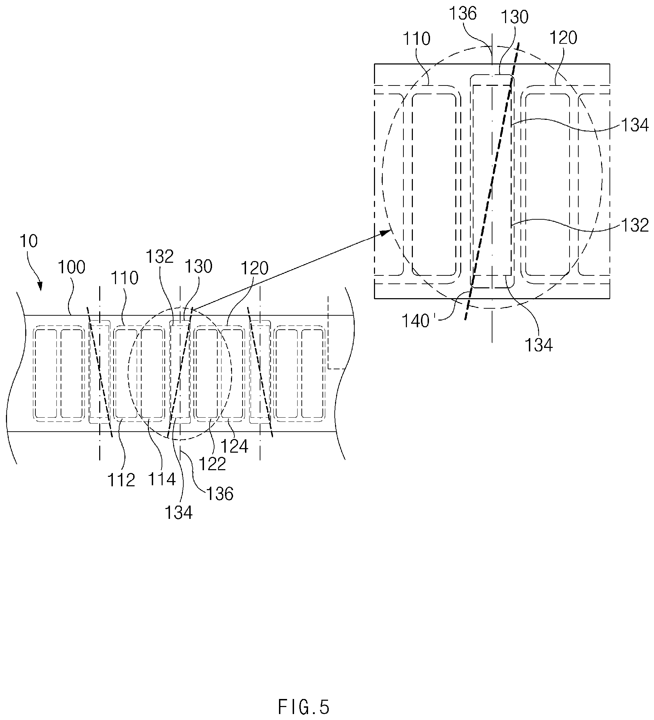

Referring to FIGS. 5 to 7, according to another preferred embodiment of the present disclosure, a manufacturing method of a pouch for a secondary battery includes a step of preparing a pouch fabric 100 in which a first pocket area 110, a second pocket area 120 disposed to be spaced apart from the first pocket area 110, and a gas pocket area 130 disposed between the first pocket area 110 and the second pocket area 120 are defined; and a step of cutting the pouch fabric 100 along a cutting line 140' passing through the gas pocket area 130, wherein when the pouch fabric 100 is cut along the cutting line 140', the gas pocket area 130 is divided into a first divided gas pocket area 132 connected to the first pocket area 110 and a second divided gas pocket area 134 connected to the second pocket area 120, and wherein the cutting line 140' may be defined in a straight line inclined with respect to the center line 136 so as to be defined in a left-right asymmetrical manner based on the center line 136 passing through the center of the gas pocket area 130.

The cutting line 140' may be defined to be inclined at various angles with respect to the center line 136, and the present disclosure is not limited or restricted by the angle of the cutting line 140' with respect to the center line 136.

For example, the cutting line 140' may be defined as a straight line inclined at an angle of approximately 30 degrees with respect to the center line 136.

Preferably, the first divided gas pocket area 132 and the second divided gas pocket area 134 may be defined to be rotationally symmetrical based on the cutting line 140'.

Here, when the first divided gas pocket area 132 and the second divided gas pocket area 134 are rotationally symmetrical based on the cutting line 140', it may be understood that the first divided gas pocket area 132 and the second divided gas pocket area 134 are rotationally symmetrical by 180 degrees with respect to the cutting line 140'.

According to a preferred embodiment of the present disclosure, the first divided gas pocket area 132 and the second divided gas pocket area 134 may be defined to have a triangular shape (e.g., a right triangle).

As in the above-described embodiment, the cutting line 140' may be formed at each of the left and right ends of the first pocket area 110 (or the second pocket area) based on the first pocket area 110 (or the second pocket area).

According to a preferred embodiment of the present disclosure, the first divided gas pocket area 132 may be provided symmetrically at both ends of the first pocket area 110 based on a first fold line 116 defined to pass through the centers of the 1-1 pocket 112 and the 1-2 pocket 114.

Similarly, the second divided gas pocket area 134 may be provided symmetrically at both ends of the second pocket area 120 based on a second fold line 126 defined to pass through the centers of the 2-1 pocket 122 and the 2-2 pocket 124.

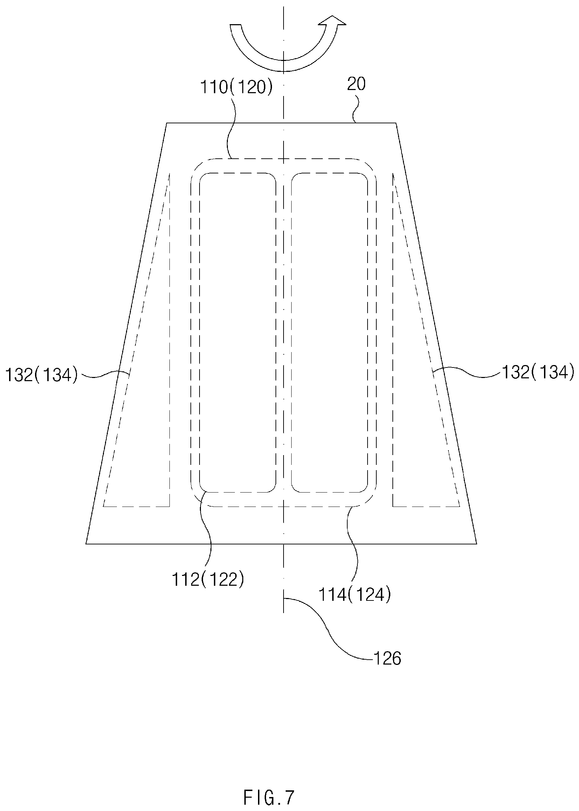

Referring to FIG. 7, the pouch body 20 cut from the pouch fabric 100 may be folded around the first fold line 116 (or the second fold line).

As the pouch body 20 is folded around the first fold line 116 (or the second fold line), the 1-1 pocket 112 (or the 2-1 pocket) and the 1-2 pocket 114 (or the 2-2 pocket) may overlap each other and cooperatively define the pocket portion 30 in which the electrode assembly 50 is accommodated, and the first pocket area 110 (or the second pocket area) may define the gas pocket portion 40'.

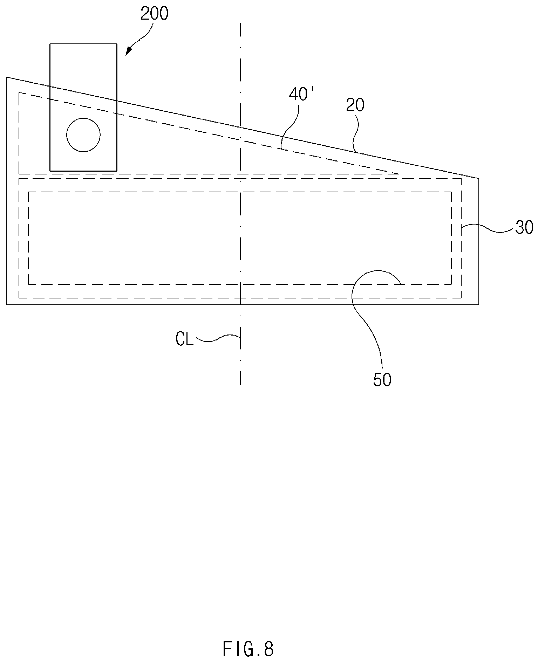

Meanwhile, the pouch for a secondary battery 10 manufactured by the manufacturing method of a pouch for a secondary battery according to another embodiment of the present disclosure may be confirmed in FIG. 8.

Referring to FIG. 8, the pouch for a secondary battery 10 according to the embodiment of the present disclosure includes a pouch body 20; a pocket portion 30 provided in the pouch body 20 and accommodating an electrode assembly 50; and a gas pocket portion 40' provided in the pouch body 20 to be spaced apart from the pocket portion 30 and accommodating gas generated from the electrode assembly 50, wherein the gas pocket portion 40' may be provided to have a cross-sectional area that gradually decreases from one end (the left end based on FIG. 8) toward the other end (the right end based on FIG. 8) so as to have a left-right asymmetrical shape based on a reference line CL passing through the center of the pocket portion 30.

According to a preferred embodiment of the present disclosure, the gas pocket portion 40' may be provided to have a triangular shape (e.g., a right triangle).

Although the present disclosure has been described centered on the embodiment hereinabove, this is merely an example and does not limit the present disclosure, and those having ordinary skill in the art will understand that various modifications and applications not exemplified above are possible without departing from the essential characteristics of the present embodiment. For example, each component specifically shown in the embodiment may be modified and implemented. And, the differences related to such modifications and applications should be construed as being included in the scope of the present disclosure defined in the appended claims.

### [List of Reference Numerals]

10: Pouch for secondary battery
20: Pouch body
30: Pocket portion
40, 40': Gas pocket portion
50: Electrode assembly
100: Pouch fabric
110: First pocket area
112: 1-1 pocket
114: 1-2 pocket
116: First fold line
120: Second pocket area
122: 2-1 pocket
124: 2-2 pocket
126: Second fold line
130: Gas pocket area
132: First divided gas pocket area
134: Second divided gas pocket area
136: Center line
140, 140': Cutting line
142: First vertical cutting line
144: Cross-cutting line
146: Second vertical cutting line
200: Venting unit

## Claims

1. A manufacturing method of a pouch for a secondary battery, comprising:
a step of preparing a pouch fabric in which a first pocket area, a second pocket area disposed to be spaced apart from the first pocket area, and a gas pocket area disposed between the first pocket area and the second pocket area are defined; and
a step of cutting the pouch fabric along a cutting line passing through the gas pocket area,
wherein when the pouch fabric is cut along the cutting line, the gas pocket area is divided into a first divided gas pocket area connected to the first pocket area and a second divided gas pocket area connected to the second pocket area, and
wherein the cutting line is defined in a left-right asymmetrical manner based on a center line passing through the center of the gas pocket area.

2. The manufacturing method of a pouch for a secondary battery according to claim 1,
wherein the cutting line comprises:
a first vertical cutting line defined in the gas pocket area adjacent to the first pocket area;
a cross-cutting line connected to an end of the first vertical cutting line along a direction intersecting the first vertical cutting line; and
a second vertical cutting line connected to an end of the cross-cutting line and defined in the gas pocket area adjacent to the second pocket area.

3. The manufacturing method of a pouch for a secondary battery according to claim 2,
wherein the cross-cutting line is defined to be orthogonal to the first vertical cutting line and the second vertical cutting line.

4. The manufacturing method of a pouch for a secondary battery according to claim 2,
wherein the first divided gas pocket area and the second divided gas pocket area are defined to be symmetrical based on the cross-cutting line.

5. The manufacturing method of a pouch for a secondary battery according to claim 2,
wherein the first divided gas pocket area and the second divided gas pocket area are defined to have a rectangular shape.

6. The manufacturing method of a pouch for a secondary battery according to claim 1,
wherein the cutting line is defined in a straight line inclined with respect to the center line.

7. The manufacturing method of a pouch for a secondary battery according to claim 6,
wherein the first divided gas pocket area and the second divided gas pocket area are defined to be rotationally symmetrical based on the cutting line.

8. The manufacturing method of a pouch for a secondary battery according to claim 6,
wherein the first divided gas pocket area and the second divided gas pocket area are defined to have a triangular shape.

9. The manufacturing method of a pouch for a secondary battery according to claim 1,
wherein the first pocket area comprises:
a 1-1 pocket; and
a 1-2 pocket provided to be spaced apart from the 1-1 pocket,
wherein the first divided gas pocket area is provided symmetrically at both ends of the first pocket area based on a first fold line defined to pass through the centers of the 1-1 pocket and the 1-2 pocket.

10. The manufacturing method of a pouch for a secondary battery according to claim 1,
wherein the second pocket area comprises:
a 2-1 pocket; and
a 2-2 pocket provided to be spaced apart from the 2-1 pocket,
wherein the second divided gas pocket area is provided symmetrically at both ends of the second pocket area based on a second fold line defined to pass through the centers of the 2-1 pocket and the 2-2 pocket.

11. A pouch for a secondary battery, comprising:
a pouch body;
a pocket portion provided in the pouch body and accommodating an electrode assembly; and
a gas pocket portion provided in the pouch body to be spaced apart from the pocket portion and accommodating gas generated from the electrode assembly,
wherein the gas pocket portion is provided to have a left-right asymmetrical shape based on a reference line passing through the center of the pocket portion.

12. The pouch for a secondary battery according to claim 11,
wherein the gas pocket portion has a relatively smaller rectangular shape than the pocket portion and is provided adjacent to one end of the pocket portion.

13. The pouch for a secondary battery according to claim 11,
wherein the gas pocket portion is provided to have a cross-sectional area that gradually decreases from one end toward the other end.

14. The pouch for a secondary battery according to claim 13,
wherein the gas pocket portion is provided to have a triangular shape.
